# EUROPÄISCHE PATENTANMELDUNG

(11) **EP 0 554 466 A1**
(43) Veröffentlichungstag der Anmeldung: **11.08.1993**
(21) Anmeldenummer: 92919005.6
(22) Anmeldetag: 13.08.1992
(51) Int. Cl.: B65B 35/56

(54) **VORRICHTUNG ZUM VERTEILEN VON GEGENSTÄNDEN IN EINER BEARBEITUNGSSTRASSE**

(30) Priorität: 16.08.1991 SU 5000150
(71) Anmelder: LERNER, Moisei Mikhailovich, Petah-Tikva (IL); VOLDMAN, Svyatoslav Matveevich, Kirvat Motzkin (IL); MILGROM, Moisei Fridelevich, 279200 Belts (MD); BURYAN, Petr Lukich, 279200 Belts (MD); TARANDASH, Khaskel Abramovich, David Hamelech (IL); SUSCHENKO, Alexei Ivanovich, 279200 Belts (MD)
(72) Erfinder: LERNER, Moisei Mikhailovich, Petah-Tikva (IL); VOLDMAN, Svyatoslav Matveevich, Kirvat Motzkin (IL); MILGROM, Moisei Fridelevich, 279200 Belts (MD); BURYAN, Petr Lukich, 279200 Belts (MD); TARANDASH, Khaskel Abramovich, David Hamelech (IL); SUSCHENKO, Alexei Ivanovich, 279200 Belts (MD)
(74) Vertreter: Finck, Dieter, Dr.-Ing.
(86) Internationale Anmeldenummer: RU9200160
(87) Internationale Veröffentlichungsnummer: WO9303965

(57) **Zusammenfassung**

Die Einrichtung weist eine Transportfläche (6) auf, die zum Bewegen von Gegenständen dient und durch Stützelemente (5) gebildet ist, welche an einem Träger (2) angelenkt sind, der von einem Antrieb (3) in Bewegung versetzt wird. Die freien Enden der Stützelemente (5) liegen auf einer Kopierschablone (4) auf und bilden in der Zone ihrer schleifenartigen Abschnitte (8) eine Ablaufrinne (10), über welche die Gegenstände in entsprechende technologische Flüsse herunterrollen. Für den Fall, dass der Träger (2) in Form eines Kreises ausgebildet ist, befestigt man an dem letzteren einen Begrenzer (14), dar als Kegel gestaltet ist, welcher gemeinsam mit der Transportfläche (6) einen Kanal (15) bildet, der zur Speicherung von Gegenständen und Verschiebung derselben zur Ablaufrinne (10) dient. Die Einrichtung bewerkstelligt die Entnahme, Orientierung und stückweise Ausgabe von Gegenständen, vorzugsweise eine stückweise Zuführung von Hackfrüchten, zu den technologischen Flüssen.

## Beschreibung

### Technisches Gebiet

Die vorliegende Erfindung bezieht sich auf die Lebensmittelindustrie, insbesondere auf Einrichtungen zur Verteilung von Gegenständen auf technologische Flüsse.

### Zugrundeliegender Stand der Technik

Zur Zeit ist eine Einrichtung zur Verteilung von Gegenständen auf technologische Flüsse bekannt, die einen Träger mit Antrieb und ein Mittel zur stückweisen Entnahme von Gegenständen aus deren Fluss enthält (SU, B, 1206185). Der Träger ist in Form einer drehbaren Scheibe ausgebildet, an deren Kreisumfang Aufnahmen für Gegenstände vorgesehen sind. Das Mittel zur stückweisen Entnahme von Gegenständen enthält einen Keil zum Sammeln von kontinuierlich orientierten Gegenständen, einen Stössel zum Entfernen von in die Aufnahme hingeratenen überschûssigen Gegenständen, welcher hinter dem Keil in der Drehrichtung der Scheibe befestigt ist und eine Luftdüse darstellt. Die Aufnahmen weisen Öffnungen zum Durchlassen des Luftstrahls von der Düse auf, wobei die Länge der Aufnahme eine solche gewählt ist, dass eine gleichzeitige Unterbringung zweier Gegenstände sichergestellt wird. Der Keil ist aus einem federnden Werkstoff unter Bildung eines geneigten Abschnitts zum Zusammenwirken mit der von der Scheibe am weitesten entfernten Oberfläche von Gegenständen ausgeführt.

Wenn in die Aufnahme zwei Gegenstände in der richtigen Lage geraten, so wird der zweite (der überschüssige) Gegenstand beim Herangehen der Öffnung der Aufnahme an die Düse durch den Luftstrahl von der Scheibe weggeblasen, während der zurückgebliebene Gegenstand seine Bewegung fortsetzt und unter den Keil hingelangt. Ist der Gegenstand richtig orientiert, so presst der Keil ihn an die Scheibe an und kommt dann ausser Zusammenwirkung mit demselben, indem er ihn in der Aufnahme belässt. Danach tritt der Gegenstand in eine Rinne ein. Falls in die Aufnahme zwei Gegenstände geraten, von denen sich der eine (der erste) in der unrichtigen und der zweite in der richtigen Lage befindet, so wird in diesem Fall der erste Gegenstand durch den Keil aus der Aufnahme entfernt, während der zweite Gegenstand den frei gewordenen Platz in der Aufnahme einnimmt, den Wirkungsbereich des Luftstrahls verlässt und bei der weiteren Drehung der Scheibe in die Rinne gelangt.

Wenn der Gegenstand unrichtig orientiert ist, so tritt der Keil auf seinen einen Rand, während der zweite Rand des Gegenstandes dabei von der Scheibe abgeht und über die Tiefe der Aufnahme hinausgreift, so dass ein solcher Gegenstand bei der weiteren Drehung der Scheibe aus der Aufnahme herausfällt, indem er auf einen als konischer Abschnitt ausgebildeten Abweiser gelangt, sich umdreht und bereits in der richtig orientierten Lage zur Scheibe kommt. Des weiteren wiederholt sich der Vorgang.

Die in Rede stehende Einrichtung kann tellerförmige Gegenstände mit Boden und Tellerfedern zuführen, weil die in der Feder vorhandene Öffnung die Arbeit der Einrichtung nicht behindert.

Bei Verwendung der bekannten Einrichtung ist keine Mößglichkeit vorgesehen, die Entnahme von Gegenständen, beispielsweise von Hackfrüchten, aus dem Fluss ohne Beschädigung ihrer Oberflache unter nachfolgender stückweisen Zuführung in die Kontrollzone beim Sortieren nach verschiedenen Gütekennwerten zustandezubringen.

### Offenbarung der Erfindung

Der vorliegenden Erfindung ist die Aufgabe zugrundegelegt, eine Einrichtung zur Verteilung von Gegenständen auf technologische Flüsse mit einer solchen konstruktiven Ausführung des Trägers und des Mittels zur stückweisen Entnahme von Gegenständen aus deren Fluss zu schaffen, die es gewährlieisten würde, eine Beschädigung der Oberfläche von zu sortierenden Gegenständen _{z}u vermeiden.

Die gestellte Aufgabe wird dadurch gelöst, dass in der Einrichtung zur Verteilung von Gegenständen auf technologische Flüsse, enthaltend einen Träger mit Antrieb und ein Mittel zur stückweisen Entnahme von Gegenständen aus deren Fluss, erfindungsgemäss das Mittel zur stückweisen Entnahme von Gegenständen aus deren Fluss mit Stützelementen und einer Kopierschablone versehen ist, wobei die Stützelemente mit Möglichkeit einer aufeinanderflolgenden Befestigung an dem Träger und eines Kontaktes mit der Kopierschablone ausgeführt sind und eine Transportfläche bilden, während die Kopierschablone eine Horizontalführung, die mindestens einen unter einem Winkel zur Horizontalen angeordneten schleifenartigen Abschnitt besitzt, darstellt und längs der Stützelemente und längs des Trägers verschiebbar montiert ist.

Es ist zweckmässig, dass die erfindungsgemässe Einrichtung zusätzlich mit einem Begrenzer ausgestattet ist, der Träger die Form eines Kreises hat und die Kopierschablone eine geschlossene Führung darstellt, wobei die Stützelemente unter einem Winkel zur Horizontalen unter Bildung einer Transportfläche angeordnet sind und der Begrenzer als Kegel gestaltet ist, dessen Grundfläche am Träger starr befestigt ist und mit der Transportfläche der Stützelemente einen Kanal bildet, welcher zur Speicherung von Geneständen dient.

Es ist auch zweckmässig, dass die Einrichtung zusätzlich mit einem Abweiser versehen ist, dessen Form der Querschnittsform des Kanals entspricht, wobei der Abweiser mit der Kopierschablone starr verbunden ist.

Die Vermeidung der Beschädigung der Oberfläche von zu sortierenden Gegenständen ist durch die Ausnutzung der Transportfläche bedingt, die durch die aufeinanderfolgend befestigten Stützelemente gebildet ist, welche mit dem schleifenartigen Abschnitt der Kopierschablone kontaktieren, der längs des Trägers in Abhängigkeit von der gewählten Stelle der Entladung von Gegenständen verschoben wird.

### Kurze Beschreibung der Zeichnungen

Im folgenden wird die vorgeschlagene Erfindung durch konkrete Ausführungsbeispiele derselben und anhand von beigefügten Zeichnungen erläutert, in denen es zeigt:
Fig. 1 in schematischer Darstellung die Gesamtansicht der Einrichtung zur Verteilung von Gegenständen auf technologische Flüsse, gemäss der Erfindung;
Fig. 2 eine Ansicht in Pfeilrichtung A von Fig. 1;
Fig. 3 eine Ausführungsvariante der Einrichtung mit einem Träger, der die Form eines Kreises hat, gemäss der Erfindung;
Fig, 4 einen Schnitt in Richtung der Linie IV - IV der Fig. 3.

### Beste Ausführungsvarianten der Erfindung

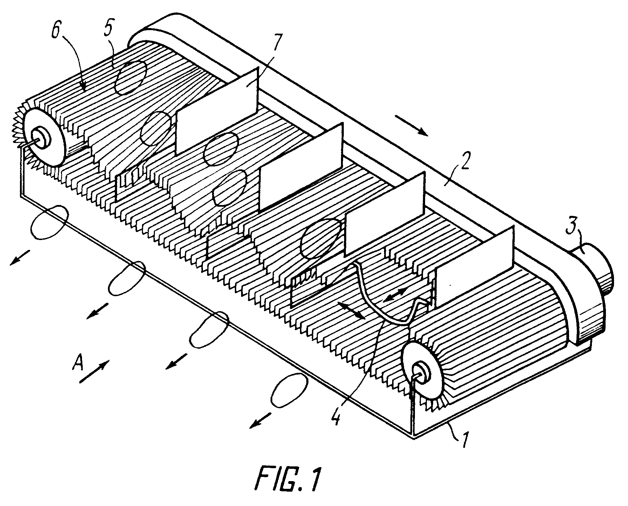

Die Einrichtung zur Verteilung von Gegenständen auf technologische Flüsse, vorzugsweise _{z}ur stückweisen Zuführung von Hackfrüchten zum Sortieren, enthält einen Unterbau 1 (Fig. 1), auf dem ein Träger 2 mit Antrieb 3 verschiebbar montiert ist. Auf dem Unterbau 1 ist eine Kopierschablone 4 starr befestigt, deren Lage räumlich veränderbar ist. Am Träger 2 sind Stützelemente 5 angelenkt, deren freies Ende auf der Kopierschablone 4 aufliegt. Dabei bilden die am Träger 2 aufeinanderfolgend angebrachten Stützelemente 5 eine Transportfläche 6. An der Kopierschablone 4 wird ein Abweiser 7 starr befestigt.

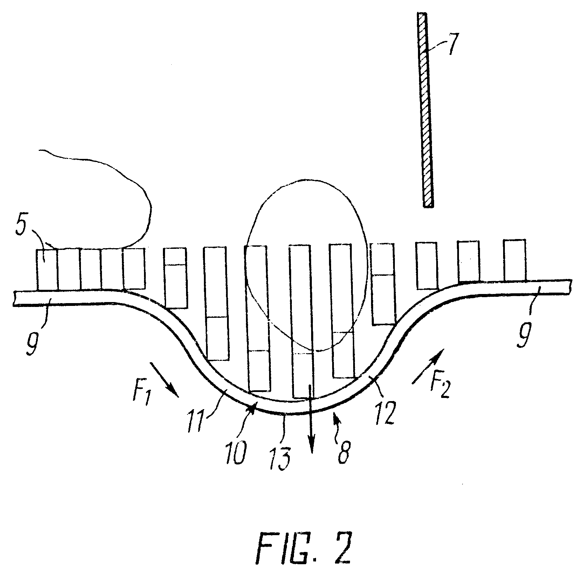

Die Kopierschablone 4 besitzt mindestens einen schleifenartigen Abschnitt 8 (Fig. 2), der mit den horizontalen Abschnitten 9 derselben konjugiert ist und eine Ablaufrinne 10 mit einem absteigenden und einem aufsteigenden Bereich 11 bzw. 12 bildet. Der Boden 13 der Rinne 10 ist in der zur Abrollrichtung des Gegenstandes senkrechten Richtung beweglich.

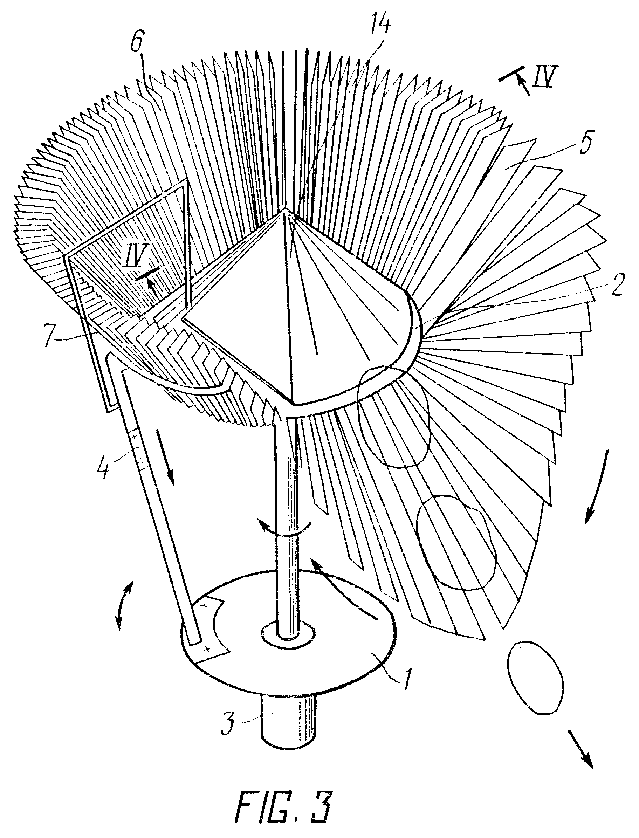

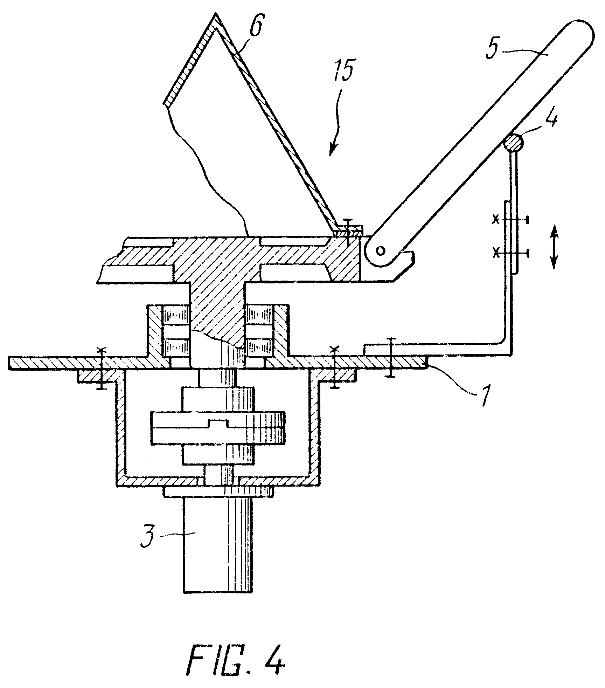

Falls die Einrichtung horizontal geschlossen ausgeführt ist, hat der Träger 2 (Fig. 3) die Form eines Kreises und ist mit einem daran starr befestigten Begrenzer 14 ausgestattet, der einen Kegel darstellt, wobei die Kegelfläche des Begrenzers 14 mit der Stützfläche 6 der Stützelemente 5 einen Kanal 15 (Fig. 4) zur Speicherung und Baförderung von Gegenständen bildet. Die erfindungsgemässe Einrichtung arbeitet folgendermassen.

Die Gegenstände gelangen auf die Transportfläche 6 (Fig. 1) oder in den Kanal 15 (Fig. 3). Die Stützelemente 5 (Fig. 1), welche durch den Träger 2 bewegt werden, kontaktieren mit dem horizontalen Abschnitt 9 der Kopierschablon 4 und bilden die Transportfläche 6, welche die Gegenstände zur Entladungsstelle bringt. Hier geht der horizontale Abschnitt 9 der Kopierschablone 4 in den schleifenartigen Abschnitt 8 über und die Stützelemente 5 kontaktieren aufeinanderfolgend mit dem absteigenden und dem aufsteigenden Bereich 11, 12 des scheifenartigen Abschnitts 8 der Kopierschablone 4, indem sie die Ablaufrinne 10 bilden, über die die Gegenstände abrollen.

Der Boden 13 der gebildeten Ablaufrinne 10 ist in der zur Abrollrchtung des Gegenstandes senkrechten Richtung beweglich.

In Richtung der Vektoren der Tangentialgeachwindigkeit des Stützelementes 5 in dem absteigenden Bereich 11 und dem aufsteigenden Bereich 12 des schleifenartigen Abschnitts 8 wirken auf den Gegenstand Reibungskräfte F₁ und F₂, die ein Paar von Kräften bilden, welche den Gegenstand in bezug auf die Symmetrieachse der Ablaufrinne 10 drehen und den Gegenstand mit seiner Längsachse entlang der Abrollrichtung orientieren.

Um die Orientierung von Gegenständen, deren Länge die Breite der gebildeten Ablaufrinne 10 übersteigt, zu erleichtern, ist hinter der Ablaufrinne 10 auf dem Transportabschnitt oder im Kanal 15 (Fig. 4) zur Speicherung und Beförderung von Gegenständen der mit Kopierschablone starr verbundene Abweiser 7 (Fig. 1) angeordnet, der mit den ankommenden Gegenständen zusammenwirkt und diese zwingt, mit der Längsachse in der Abrollrichtung zu schwenken.

Bei Verlagerung der Kopierschablone 4 längs des Trägers 2 verändert man die Entladungsstelle von Gegenständen.

Bei Verschiebung der Kopierschablone 4 längs des Stützelementes 5 verändert man den Neigungswinkel der Ablaufrinne 10, wobei man den Neigungswinkel in Abhängigkeit von der Geschwindigkeit des Abrollens des Gegenstandes wählt.

### Gewerbliche Verwertbarkeit

Die Erfindung kann angewendet werden in verschiedenen Industriezweigen bei der Verteilung von Gegenständen auf technologische Flüsse nach der Sortierung derselben je nach den Gütekennwerten, die vom Verbraucher vorgegebenen werden, bei der Aufbereitung und Vermarktung von landwirtschaftlichen Erzeugnissen.

## Patentansprüche

1. Einrichtung zur Verteilung von Gegenständen auf technologische Flüsse, enthaltend einen Träger (2) mit Antrieb (3) und ein Mittel zur Stückweisen Entnahme von Gegenständen aus deren Fluss, dadurch **gekennzeichnet,** dass das Mittel zur stückweisen Entnahme von Gegenständen aus deren Fluss mit Stützelementen (5) und einer Kopierschablone (4) versehen ist, wobei die Stützelemente (5) mit Möglichkeit einer aufeinanderfolgenden Befestigung an dem Träger (2) und eines Kontaktes mit der Kopierschablone (4) ausgeführt sind und eine Transportfläche (6) bilden, während die Kopierschablone (4) eine Horizontalführung, die mindestens einen unter einem Winkel zur Horizontalen angeordneten schleifenartigen Abschnitt (8) besitzt, darstellt und längs der Stützelemente (5) und längs des Trägers (2) verschiebbar montiert ist.

2. Einrichtung zur Verteilung von Gegenständen auf technologische Flüsse nach Anspruch 1, dadurch **gekennzeichnet,** dass sie zusätzlich mit einem Begrenzer (14) ausgestattet ist, der Träger (2) die Form eines Kreises hat und die Kopierschablone (4) eine geschlossene Führung darstellt, wobei die Stützelemente (5) unter einem Winkel zur Horizontalen unter Bildung einer Transportfläche (6) angeordnet sind und der Begrenzer (14) in Gestalt eines Kegels ausgebildet ist, dessen Grundfläche am Träger (2) starr befestigt ist und mit der Transportfläche (6) der Stützelemente (5) einen Kanal (15) bildet, welcher zur Speicherung von Gegenständen dient.

3. Einrichtung zur Verteilung von Gegenständen auf technologische Flüsse nach Anspruch 2, dadurch **gekennzeichnet,** dass sie zusätzlich mit einem Abweiser (7) versehen ist, dessen Form der Querschnittsform des Kanals (15) entspricht, wobei der Abweiser (7) mit der Kopierschablone (4) starr verbunden ist.
